# EUROPEAN PATENT SPECIFICATION

(11) **EP 1 191 260 B1**
(45) Date of publication and mention of the grant of the patent: **31.08.2005**
(21) Application number: 01203540.8
(22) Date of filing: 18.09.2001
(51) Int. Cl.: F16H 61/16, F16H 61/18

(54) **Gear shift system for a vehicle**
Schalteinrichtung für Fahrzeuggetriebe
Système de passage de vitesses pour véhicule

(30) Priority: 25.09.2000 JP 2000290942
(43) Date of publication of application: 27.03.2002
(73) Proprietor: AISIN SEIKI KABUSHIKI KAISHA, Aichi-ken (JP); AISIN AI Co., Ltd., Aichi-ken (JP)
(72) Inventor: Miyagawa, Hiroshi, Aichi-ken (JP); Shimizu, Masaru, Toyota-shi, Aichi-ken (JP); Taguchi, Yoshinori, Anjo-shi, Aichi-ken (JP); Haneda, Yoshitomi, Anjo-shi, Aichi-ken (JP); Tozu, Kenji, Yokkaichi-shi, Mie-ken (JP); Hosoi, Yasuhiro, Gamagori-shi, Aichi-ken (JP); Miyazaki, Takeshige, Anjo-shi, Aichi-ken (JP); Aoyama, Yoshiyuki, Nishio-shi, Aichi-ken (JP); Itoh, Yoshiki, Nukata-gun, Aichi-ken (JP)
(74) Representative: Serjeants

(56) References cited:
- EP-A- 0 475 390
- EP-A- 1 001 192
- GB-A- 2 315 305
- US-A- 4 825 993
- US-A- 6 014 603
- PATENT ABSTRACTS OF JAPAN vol. 010, no. 083 (M-466), 2 April 1986 (1986-04-02) -& JP 60 222646 A (AISHIN WARNER KK), 7 November 1985 (1985-11-07)

## Description

### FIELD OF THE INVENTION

This invention generally relates to a gear shift system for a vehicle. More particularly, this invention pertains to a vehicle gear shift system including an automated manual transmission, in which a shift operation is performed by an actuator for a shift operation in response to a manual operation of an operating lever (generally known as a shift lever). Further, this invention pertains to a vehicle gear shift system including an automated manual transmission, in which an input shaft thereof is connected to an output shaft of an engine and a starter for driving the engine is activated when a shift stage of the automated manual transmission is at a neutral position.

### BACKGROUND OF THE INVENTION

An automated manual transmission is disclosed in a Japanese Patent Laid-open application 58(1983)-134256. According to the automated manual transmission, a shift operation is performed by an actuator for a shift operation in response to a manual operation of an operating lever. The automated manual transmission employs an electric actuator for selecting movements of a shift rod and an electric actuator for shifting movements of the shift rod. The electric actuators in combination control the shift operation.

The automated manual transmission is structurally based on a manual transmission (MT). The automated manual transmission can perform the automatic shift operations based on a vehicle driving condition or semiautomatic shift operations based on the driver's intention. This type of automated manual transmission requires the actuators as a substitute for a manual linkage from the operating lever which is moved by a driver in the case of the manual transmission.

In vehicles including such an automated manual transmission, an engine starter motor can be activated only when a shift stage of the automated manual transmission is at a neutral position. Therefore, the vehicle is designed to prevent forward motion of the vehicle under the impulsion of the starter motor. This requires that the shift actuators be capable of being actuated even when the engine is switched off, in order to permit movement of the transmission to the neutral shift position.

This invention is based on the observation that when the engine is not running, no electric charge is delivered to the vehicle battery. Should the shifting lever be unnecessarily and repeatedly operated under the above condition, the electric actuators for the shift operation are repeatedly activated in response to the operation of the shifting lever. Therefore, electric power of the battery may be consumed excessively. Further, the battery charge sometimes may run out.

It is an object of this invention to address the problem identified above and other related problems.

### SUMMARY OF THE INVENTION

The invention provides a gear shift system for a motor vehicle comprising an automated manual transmission for transmitting motive power from the engine to wheels of the vehicle, a starter motor for the engine of the vehicle and means for preventing actuation of the starter motor except when the transmission is in its neutral condition. The invention is as set forth in claim 1 herein.

Preferably the neutral shift means is enabled only when the vehicle speed is below a predetermined forward or rearward speed. In that case the gear shift system preferably further comprises:
a forward shift means effective when the engine is stopped and the vehicle speed is at or above the predetermined vehicle speed in a forward direction, to enable the actuators to control the shift operation of the transmission to a forward shift stage in response to operation of the operating lever, and optionally
a rearward shift means effective when the engine is stopped and the vehicle speed is at or above the predetermined vehicle speed in a rearward direction, to enable the actuators to control the shift operation of the transmission to a rearward shift stage in response to operation of the operating lever.

### BRIEF DESCRIPTION OF THE DRAWING FIGURES

An embodiment of the invention is illustrated in the accompanying drawings, in which :
Fig. 1 is a schematic block view illustrating a vehicle driving mechanism employing a shifting system according to the embodiment of the present invention ;
Fig. 2 is a schematic view illustrating an automated manual transmission shown in Fig. 1 ;
Fig. 3 is a drawing illustrating a shift pattern of a shift lever operating the automated manual transmission shown in Figs. 1 and 2 ;
Fig. 4 is a flow chart showing a program performed by an electric controller shown in Fig. 1 ;
Fig. 5 is a flow chart showing a sub-routine of the "neutral shift means" shown in Fig. 4 ;
Fig. 6 is a flow chart showing a sub-routine of the "forward shift means" shown in Fig. 4 ; and
Fig. 7 is a flow chart showing a sub-routine of the "rearward shift means" shown in Fig. 4.

### DETAILED DESCRIPTION OF THE INVENTION

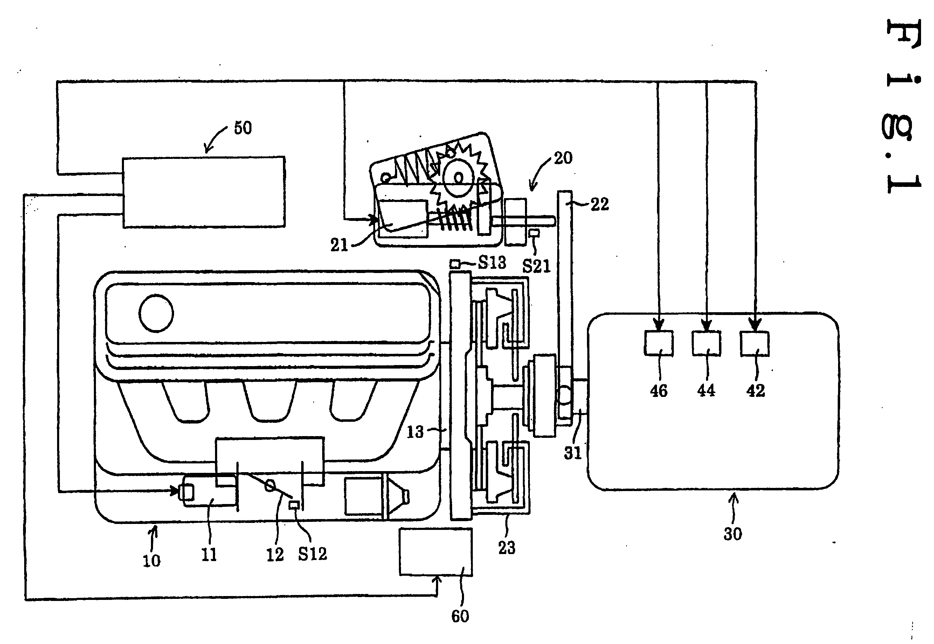

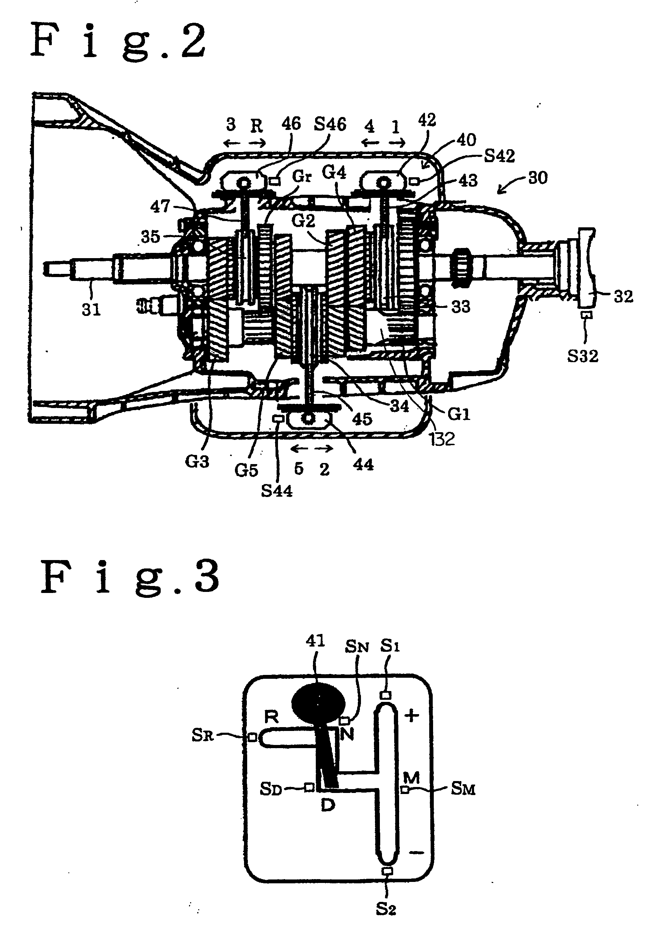

A vehicle driving mechanism shown in Fig. 1 includes an engine 10, an automatic clutch 20 fixed to an output portion of the engine 10, and an automated manual transmission 30. The automated manual transmission 30 is connected to the engine 10 via the automatic clutch 20. The automatic clutch 20 and the automated manual transmission 30 are controlled by an electric controller 50 in response to a manual operation of a shift lever 41 (an operating lever in claim 1, shown in Fig. 3).

The engine 10 is provided with a throttle valve 12 controlled by an electric actuator 11 for the engine 10. The operation of the electric actuator 11 is controlled by the electric controller 50 so as to control outputted force from the engine 10. The engine 10 is activated corresponding to operation of a starter 60 for driving the engine 10.

The engine 10 is provided with a throttle valve sensor S12 for detecting an operating position of the throttle valve 12, i.e. for detecting a valve opening degree of the throttle valve 12. The engine 10 is further provided with a rotation sensor S13 for detecting a rotational speed of a crank shaft (an output shaft) 13 of the engine 10. Each sensor S12 and S13 is connected (not shown) to the electric controller 50 so as to input a detected signal from each sensor S12 and S13 to the electric controller 50.

The automatic clutch 20 is provided with a clutch lever 22 moved by an electric actuator 21 for the automatic clutch 20. Operation of the electric actuator 21 is controlled by the electric controller 50 so as to control a movement of the clutch lever 22. Accordingly, a switching operation of a friction clutch 23 (a mechanical dry type- single disc clutch) is controlled, wherein power transmission from the engine 10 is established or interrupted. The automatic clutch 20 is provided with a clutch engaging sensor S21 for detecting a moving position of the clutch lever 22, i.e. for detecting an engaging condition of the friction clutch 23. The clutch engaging sensor S21 is connected (not shown) to the electric controller 50 so as to input a detected signal from the clutch engaging sensor S21 to the electric controller 50.

As shown in Fig. 1 and Fig. 2, the automated manual transmission 30 includes an input shaft 31, an output shaft 32, a counter shaft 132, three pairs of gear sets (G4 and G1; G5 and G2; G3 and Gr), and three sleeves 33, 34, 35 respectively disposed between the gear sets of each of the three pairs. The input shaft 31 and the output shaft 32 are disposed parallel to the counter shaft 132. The three pairs of gear sets are configured with a total of six gear sets G1 through G5 and Gr. The automated manual transmission 30 is a biaxial type gear transmission which is applicable for five forward shift stages and a single rearward shift stage. The input shaft 31 is connected to an output portion (a clutch disc) of the friction clutch 23 so as to establish a power transmission path. The output shaft 32 is connected to an axle shaft (not shown) so as to establish a power transmission path. Each sleeve 33, 34, and 35 is axially moved corresponding to an actuation of a shift operating mechanism 40, enabling the driving force to be transmitted via any of the six gear sets.

One of the pairs of gear sets, illustrated at the right side of Fig. 2, is a gear set G1 for a first shift stage and a gear set G4 for a fourth shift stage. The gear sets G1 and G4 face each other and the first sleeve 33 is disposed therebetween. A second pair of gear sets, illustrated at the middle of Fig. 2, is a gear set G2 for a second shift stage and a gear set G5 for a fifth shift stage. The gear sets G2 and G5 face each other and the second sleeve 34 is disposed therebetween. A third pair of gear sets, illustrated at the left side of Fig. 2, is a gear set G3 for a third shift stage and a gear set Gr for a reverse shift stage. The gear sets G3 and Gr face each other and the third sleeve 35 is disposed therebetween.

The transmission 30 is further provided with a rotation sensor S32 for detecting a rotational speed of the output shaft 32 and a rotating direction thereof. The rotational speed corresponds to a vehicle speed. The rotating direction of the output shaft 32 corresponds to a forward or rearward movement of the vehicle. The rotation sensor S32 is connected (not shown) to the electric controller 50 so as to input a detected signal by the rotation sensor S32 into the electric controller 50. The rotation sensor S32 is formed of a pair of sensors disposed with a phase lag relative to the output shaft 32 and serves for detecting the vehicle speed and the forward or rearward movement of the vehicle.

The shift operating mechanism 40 is provided with the shift lever 41 operated based upon a shift pattern shown in Fig. 3. The shift operating mechanism 40 further includes an electric actuator 42 for axially moving the first sleeve 33, a shift fork 43, an electric actuator 44 for axially moving the second sleeve 34, a shift fork 45, an electric actuator 46 for axially moving the third sleeve 35, and a shift fork 47. Operation of the respective electric actuators 42, 44, and 46 is controlled by the electric controller 50. Each of the respective electric actuators 42, 44, and 46 is comprised with an electric motor with speed reduction gears, a pinion gear rotatably activated by the electric motor, and a gear rack engaged with the pinion gear and integrally shifted with each shift fork 43, 45, 47.

The shift operating mechanism 40 further includes respective sensors S42, S44 and S46 for detecting a shifting position of each sleeve 33, 34, and 35, i.e. for detecting the power transmission path being engaged or interrupted via each gear set. Each sensor S42, S44 and S46 is connected (not shown) to the electric controller 50 so as to input a detected signal therefrom to the electric controller 50.

Respective sensors SN, SR, SD, SM, S1, and S2 for detecting the operating position of the shift lever 41 are accommodated at each shift position (an N (neutral) position, a R (reverse) position, a D (drive) position, an M (manual) position, a positive (+) position, and a negative (-) position) of the shift lever 41. Each of the respective sensors SN, SR, SD, SM, S1, and S2 is connected (not shown) to the electric controller 50 so as to input a detected signal therefrom to the electric controller 50.

The sensor SN detects the shift operation of the shift lever 41 to the N position, i.e. to a neutral position not enabling the driving force to be transmitted from the engine 10 to the output shaft 32. The sensor SR detects the shift operation of the shift lever 41 to the R position, i.e. to a reverse position for establishing the power transmission path via the gear set Gr for the reverse shift stage. The sensor SD detects the shift operation of the shift lever 41 to the D position, i.e. to a drive position for establishing the power transmission path via any of the gear sets G1 through G5 under an automatic shift mode. The sensor SM detects the shift operation of the shift lever 41 to the M position, i.e. to a manual position for establishing the power transmission path via any of the gear sets G1 through G5 under a manual shift mode. The sensor S1 detects the shift operation of the shift lever 41 to the positive (+) position, i.e. to an upper shift position for establishing the power transmission path via a shift-up gear set. The sensor S2 detects the shift operation of the shift lever 41 to the negative (-) position , i.e. to a lower shift position for establishing the power transmission path via a shift-down gear set.

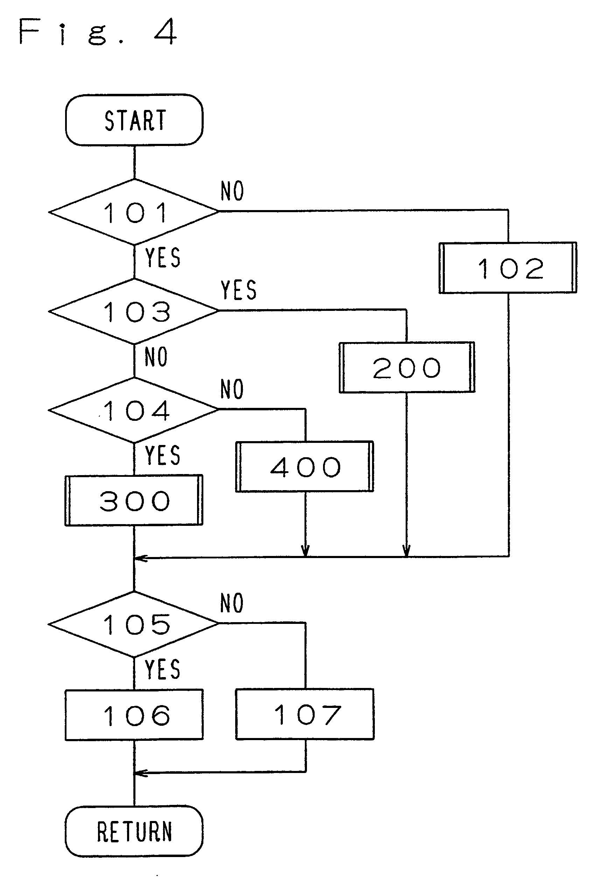

The electric controller 50 is provided with a well-known microcomputer as a main unit. The electric controller 50 receives detected signals from the throttle valve sensor S12, the rotation sensor S13 of the crank shaft 13 and the rotation sensor S32 of the output shaft 32. Programs corresponding to each flow chart shown in Figs. 4 through 7 are performed based upon each of the respective detected signals by the sensors S12, S21, S42, S44, S46 for detecting each position of each member operated by each electric actuator 11, 21, 42, 44, and 46. Further, the programs are performed based upon each of the respective detected signals by the sensors SN, SR, SD, SM, S1, and S2 for detecting the operating condition of the shift lever 41 to each of the above-described shift positions. Each of the programs is repeatedly performed every predetermined small period of time when the ignition switch is ON (being activated). Each of the respective electric actuators 11, 21, 42, 44, and 46 is operated based upon each of the detected signals by the respective above-described sensors. All actuator movements are under the control of the electric controller 50.

Operation of the embodiment of the present invention is described with reference to flow charts shown in Figs. 4 through 7. At step 101 in Fig. 4, the program judges if the crank shaft 13 of the engine 10 is rotated at less than 400rpm or not, based upon the detected signal by the rotation sensor S13. When the crank shaft 13 is rotated at 400rpm or faster, the program proceeds to step 102, wherein a sub-routine of "gear shifting control" (details are described later) is performed. At step 102, each sleeve 33, 34 and 35 is controlled by the driving of each electric actuator 42, 44, and 46 in response to the manual operation of the shift lever 41. The switching operation of the automatic clutch 20 is controlled by the driving of the electric actuator 21, wherein the shift stage of the transmission 30 is shifted in automatic or manual manner.

When the engine 10 is stopped and the vehicle is stationary, the rotational speed of the crank shaft 13 is less than 400rpm and the vehicle speed is smaller than a predetermined speed. The program proceeds to step 103 from step 101, based upon the detected signal by the rotation sensor S13. The predetermined speed in this case represents a speed (e.g. 7 Km/H) which is capable of starting the engine 10 by driving the engine using rotation of the wheels. At step 103, the program judges if the vehicle speed is less than the predetermined speed or not, based upon the detected signal by the rotation sensor S32. When the vehicle speed is less than the predetermined speed, the program proceeds to step 200, wherein a sub-routine of "neutral shift means" is performed.

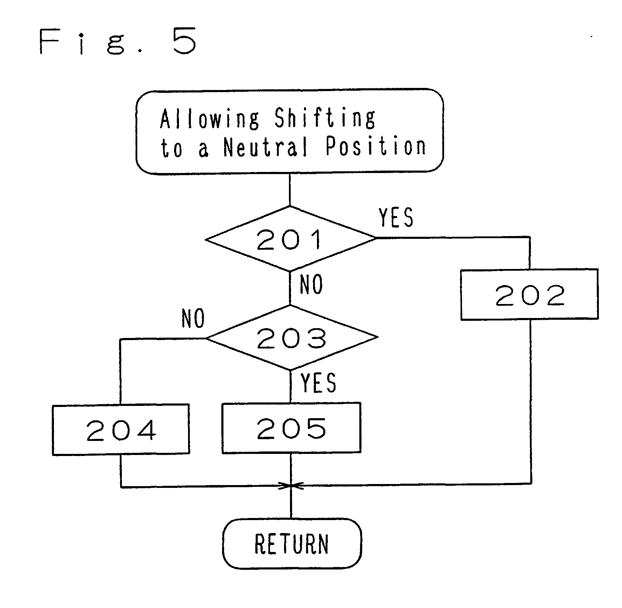

Steps 201, 202, 203, 204 and 205 in Fig. 5 show more details about the subroutine of "neutral shift means" at step 200. At step 201, the program judges if the shift stage of the transmission 30 is located at the neutral position or not, based upon the detected signals by the sensors S42, S44 and S46. When the shift stage is located at the neutral position, the program proceeds to step 202, wherein the shift stage of the transmission 30 is maintained at the neutral position.

When the shift stage is not at the neutral position, the program proceeds to step 203 from step 201. At step 203, the program judges if the shift lever 41 is located at the N position or not, based upon the detected signals by the sensors SN, SR, SD, SM, S1 and S2. When the shift lever 41 is not located at the N position, the program proceeds to step 204, wherein the shift stage of the transmission 30 is maintained at a currently selected shift stage. When the shift lever 41 is located at the N position, the program proceeds to step 205, wherein the shift stage of the transmission 30 is shifted to the neutral position with each sleeve 33, 34, and 35 being shifted to the neutral position by the respective electric actuators 42, 44, and 46.

When the engine 10 is stopped and the vehicle is moving forward or backwards at a speed which is at or above the predetermined speed, the program proceeds to step 103 from step 101, based upon the detected signal from the rotation sensor S13. The program further proceeds to step 104 from step 103, based upon the detected signal from the rotation sensor S32. At step 104 the direction of movement of the vehicle is checked, based upon the detected signal by the rotation sensor S32. If the direction of movement is forward, control passes to step 300. If it is rearwards, control passes to step 400. At step 300, a sub-routine of "forward shift means" is performed.

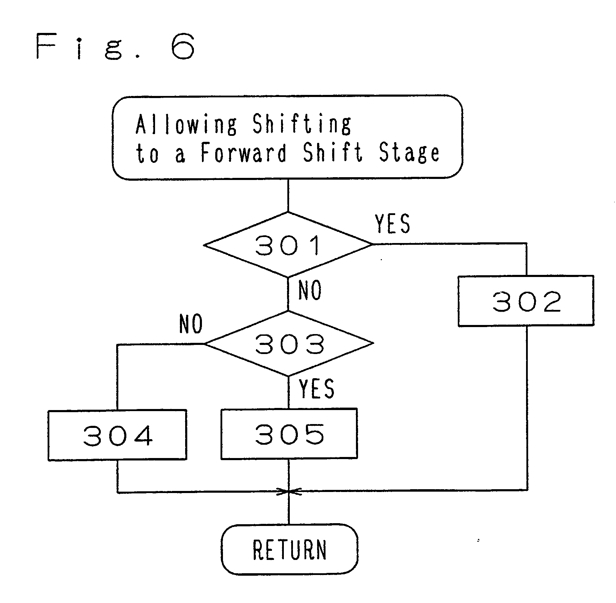

Steps 301, 302, 303, 304 and 305 in Fig. 6 show more details about the sub-routine of "forward shift means". At step 301, the program judges if the shift stage of the transmission 30 is the forward shift stage or not, based upon the detected signals from the sensors S42, S44 and S46. When the shift stage is the forward shift stage, the program proceeds to step 302, wherein the shift stage of the transmission 30 is maintained at the forward shift stage.

When the shift stage is not the forward shift stage, the program proceeds to step 303, wherein the program judges if the shift lever 41 is located at the D position or M position, based upon the detected signals by the sensors SN, SR, SD, SM, S1 and S2. When the shift lever 41 is not located at either D position or M position, the program proceeds to step 304, wherein the shift stage of the transmission 30 is maintained at the neutral position. When the shift lever 41 is located at either D position or M position, the program proceeds to step 305, wherein the shift stage of the transmission 30 is shifted to the forward shift stage with each sleeve 33, 34, and 35 being shifted by the respective electric actuators 42, 44, and 46, enabling the driving power to be transmitted via any of the gear sets G1 through G5.

When the engine 10 is stopped and the vehicle is moving rearward at a speed equal to or higher than the predetermined speed, the program proceeds from step 101 to step 104 in the same manner as described above. The program further proceeds from step 104 to step 400, based upon the detected signal by the rotation sensor S32. At step 400, a sub-routine of "rearward shift means" is performed.

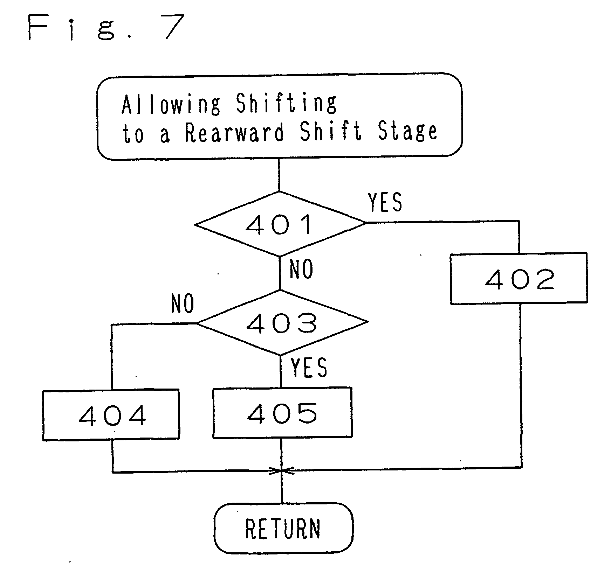

Steps 401, 402, 403, 404, and 405 in Fig. 7 show more details of the sub-routine of "rearward shift means" at step 400. At step 401 in Fig. 7, the program judges if the shift stage of the transmission 30 is the rearward shift stage or not, based upon the detected signals by the sensors S42, S44, and S46. When the shift stage of the transmission 30 is the rearward shift stage, the program proceeds to step 402, wherein the shift stage of the transmission 30 is maintained at the rearward shift stage.

When the shift stage is not the rearward shift stage, the program proceeds to step 403 from step 401, wherein the program judges if the shift lever 41 is located at the R position or not, based upon the detected signals by the sensors SN, SR, SD, SM, S1, and S2. When the shift lever 41 is not located at the R position, the program proceeds to step 404, wherein the shift stage of the transmission 30 is maintained at the neutral position. When the shift lever 41 is located at the R position, the program proceeds to step 405, wherein the shift stage of the transmission 30 is shifted to the rearward shift stage with each sleeve 33, 34, and 35 being shifted by the respective electric actuators 42, 44, and 46, enabling the driving power transmitted via the gear set Gr for the reverse shift stage.

After the program has performed each step 102, 200, 300, and 400 shown in Fig. 4, the program progresses to steps 105, 106, and 107 shown in Fig. 4. At step 105 shown in Fig. 4, the program judges if the shift stage of the transmission 30 is the neutral position or not, based upon the detected signals by the sensors S42, S44, and S46. When the shift stage is the neutral position, the program proceeds to step 106, wherein the starter 60 for driving the engine 10 is enabled. Therefore, when the shift stage of the transmission 30 is located at the neutral position, the starter 60 can be activated in response to an operation of a key (not shown), whereby the engine 10 is activated.

When the shift stage is not the neutral position, the program proceeds to step 107 from step 105, so that the starter 60 cannot be activated.

When the ignition switch is OFF, the program corresponding to the flow charts shown in Figs. 4 through 7 is not performed. None of the sleeves 33, 34, and 35 can be shifted by the respective electric actuators 42, 44, and 46 in response to the operation of the shift lever 41. Therefore, the shift stage of the transmission 30 is maintained at the currently selected shift stage.

As described above, when the ignition switch is ON, the engine 10 is stopped and the vehicle speed is less than the predetermined speed, the program performs steps 101, 103 and 200 in Fig. 4, wherein the shift operations of the electric actuators 42, 44, and 46 are controlled for shifting the shift stage only to the neutral position. The above vehicle speed condition includes the condition that the vehicle is not in motion.

Under the above condition, however repeatedly an unnecessary operation of the shift lever 41 is performed, the shift operations of the electric actuators 42, 44, and 46 are controlled for shifting the shift stage only once from an engaged driving position to the neutral position. Further, other shift operations are not allowed. Therefore, electric power of a battery accommodated in the vehicle is not consumed excessively. Further, the shift stage of the transmission 30 is shifted to the neutral position in response to the operation of the shift lever 41 to the N position under the above vehicle condition, wherein the vehicle can be rolled forwards or backwards if necessary.

According to the above described embodiment of the present invention, when the engine 10 is stopped and the vehicle is moving in a forward direction at a speed which is at or above the predetermined speed, the program performs steps 101, 103, 104, and 300. At step 300, the shift operation of each electric actuator 42, 44, and 46 is allowed for shifting the shift stage only to a forward shift stage. When the engine 10 is stopped and the vehicle is moving in a rearward direction at a speed which is at or above the predetermined speed , the program performs steps 101, 103, 104, and 400. At step 400, the shift operation of each electric actuator 42, 44, and 46 is allowed for shifting the shift stage only to the rearward shift stage.

When the engine 10 is stopped and the vehicle is not in motion, the shift stage of the transmission 30 can be shifted to the neutral position in response to the operation of the shift lever 41. When the vehicle is manually pushed, the vehicle speed is increased up to or above the predetermined speed. At that stage, the shift stage of the transmission 30 can be shifted from the neutral position to a forward shift stage or the rearward shift stage in response to the operation of the shift lever 41, whereby the engine can be started by virtue of the rotation of the vehicle wheels (not shown). The movement of the shift lever 41 from the neutral position to the forward or rearward shift position can be performed at any time before or after the vehicle is pushed or rolled into movement. If the operation of the shift lever 41 from the neutral position to the forward or rearward shift position is performed before the vehicle is moved, the shift change controlled by stage 305 or 405 takes place only when the vehicle speed reaches the predetermined speed.

According to the above described embodiment of the present invention, the shift stage of the transmission 30 is maintained at a currently selected shift stage at steps 302 and 402. Alternatively, the shift stage of the transmission 30 may be shifted to the neutral position after the shift lever 41 is moved to the N position. In this case, when the vehicle is in motion, a normal driving of the engine 10 is performed without using the virtue of a rotating power of the vehicle wheels. Further, when the engine 10 is stopped, the shift operation of each electric actuator 42, 44, and 46 may be controlled for shifting the shift stage only to the neutral position independently of the vehicle speed. In this case, steps 103, 104, 300 and 400 can be excluded.

## Claims

1. A gear shift system for a motor vehicle comprising:
an automated manual transmission (30) for transmitting motive power from an engine (10) to wheels of the vehicle, the transmission (30) including control means (50) including a gear shifting control (102) controlling actuators (42, 44, 46) which govern shift operations of the transmission (30) in response to operation of an operating lever (41);
a starter motor (60) for the engine (10) of the vehicle, and
means for preventing actuation of the starter motor (60) except when the transmission is in its neutral condition;
**characterized in that** the control means (50) includes
means (S13, 101) for sensing when the engine (10) is stopped;
means (101) for disabling the gear shifting control (102) when the engine is stopped; and
neutral shift means (200) effective when the engine is stopped to enable the actuators (42, 44, 46) to control the shift operation of the transmission (30) only to the neutral position in response to operation of the operating lever (41).

2. A gear shift system according to claim 1, further comprising:
means (S32) for sensing the vehicle speed and direction, and
means (103) for enabling the neutral shift means (200) when the vehicle speed is below a predetermined forward or rearward speed and for disabling the neutral shift means (200) when the vehicle speed is at or above the predetermined forward or rearward speed.

3. A gear shift system according to claim 2, further comprising:
a forward shift means (300) effective when the engine (10) is stopped and the vehicle speed is at or above the predetermined vehicle speed in a forward direction to enable the actuators (42, 44, 46) to control the shift operation of the transmission (30) to a forward shift stage in response to operation of the operating lever (41).

4. A gear shift system according to claim 3, further comprising:
a rearward shift means (400) effective when the engine (10) is stopped and the vehicle speed is at or above the predetermined vehicle speed in a rearward direction to enable the actuators (42, 44, 46) to control the shift operation of the transmission (30) to a rearward shift stage in response to operation of the operating lever (41).

5. A gear shift system according to any preceding claim, wherein the actuators (42, 44, 46) are electric actuators.

6. A gear shift system according to any preceding claim, wherein the automated manual transmission incorporates a plurality of pairs of gear sets (G1 and G4, G2 and G5, G3 and Gr) for establishing or interrupting a power transmission path from an input shaft (31) to an output shaft (32) of the transmission by axial movement of any of a corresponding plurality of sleeves (33, 34, 35) respectively disposed between the gear sets of each pair, wherein the power transmission path from the input shaft (31) to the output shaft (32) in any selected shift stage is established via a selected gear set by the operation of the actuators (42, 44, 46) axially moving the sleeves (33, 34, 35).

7. A gear shift system according to claim 6, further comprising:
first detecting means (S12) for detecting an operating position of a throttle valve (12);
second detecting means (S13) for detecting a rotational speed of a crank shaft (13) of the engine (10);
a third detecting means (S21) for detecting a moving position of a clutch lever (22) of an automatic clutch (20) and for detecting an engaging condition of a friction clutch (23) ;
a fourth detecting means (S42, S44, S46) for detecting a shifting position of the sleeves (33, 34, 35); and
a fifth detecting means (SN, SR, SD, SM, S1, S2) for detecting an operating position of the operating member, wherein signals detected by the detecting means are inputted into the control means;
wherein the transmission is operable in manual or automatic modes and in the automatic mode selects and controls the shift stage of the transmission in accordance with the inputs from the first to fifth detecting means.

## Patentansprüche

1. Getriebeschaltsystem für ein Kraftfahrzeug, enthaltend:
ein automatisiertes Handschaltgetriebe (30) zum Übertragen von Triebkraft von einem Motor (10) zu Rädern des Kraftfahrzeugs, wobei das Getriebe (30) ein Steuermittel (50) enthält, das eine Gangschaltsteuerung (102), welche die Stellglieder (42, 44, 46), die die Schaltvorgänge des Getriebes (30) bestimmen, in Abhängigkeit von der Betätigung eines Bedienhebels (41) steuert;
einen Anlasser (60) für den Motor (10) des Fahrzeugs, und
Mittel zum Verhindern einer Betätigung des Anlassers (60), außer wenn das Getriebe in seinem Neutralzustand ist;
**dadurch gekennzeichnet, dass** das Steuermittel (50) enthält:
Mittel (S13, 101) zum Erfassen, wenn der Motor (10) angehalten ist;
Mittel (101) zum außer Kraft setzen der Gangschaltsteuerung (102), wenn der Motor angehalten ist; und
ein Neutralschaltmittel (200), das wirksam ist, wenn der Motor angehalten ist, damit die Stellglieder (42, 44, 46) den Schaltvorgang des Getriebes (30) nur in die Neutralposition als Antwort auf die Betätigung des Bedienhebels (41) steuern können.

2. Getriebeschaltsystem nach Anspruch 1, weiter enthaltend:
Mittel (S32) zum Erfassen der Fahrzeuggeschwindigkeit und Richtung, und
Mittel (103) zum in Kraft setzen des Neutralschaltmittels (200), wenn die Fahrzeuggeschwindigkeit unter einer vorbestimmten Vorwärts- oder Rückwärtsgeschwindigkeit ist, und um das Neutralschaltmittel (200) außer Kraft zu setzen, wenn die Fahrzeuggeschwindigkeit auf oder über der vorbestimmten Vorwärts- oder Rückwärtsgeschwindigkeit ist.

3. Getriebeschaltsystem nach Anspruch 2, weiter enthaltend:
ein Vorwärtsschaltmittel (300), das effektiv ist, wenn der Motor (10) angehalten ist und die Fahrzeuggeschwindigkeit auf oder über der vorbestimmten Fahrzeuggeschwindigkeit in einer Vorwärtsrichtung ist, damit die Stellglieder (42, 44, 46) den Schaltvorgang des Getriebes (30) in eine Vorwärtsschaltstufe als Antwort auf die Betätigung des Betätigungshebels (41) steuern können.

4. Getriebeschaltsystem nach Anspruch 3, weiter enthaltend:
ein Rückwärtsschaltmittel (400), das effektiv ist, wenn der Motor (10) angehalten ist und die Fahrzeuggeschwindigkeit auf oder über der vorgegebenen Fahrzeuggeschwindigkeit in einer Rückwärtsrichtung ist, damit die Stellglieder (42, 44, 46) den Schaltvorgang des Getriebes (30) in eine Rückwärtsschaltstufe als Antwort auf die Betätigung des Betätigungshebels (41) steuern können.

5. Getriebeschaltsystem nach einem der vorhergehenden Ansprüche, wobei die Stellglieder (42, 44, 46) elektrische Stellglieder sind.

6. Getriebeschaltsystem nach einem der vorhergehenden Ansprüche, wobei das automatisierte Handschaltgetriebe eine Mehrzahl von Paaren von Zahnradsätzen (G1 und G4, G2 und G5, G3 und Gr) zum Herstellen oder Unterbrechen eines Leistungsübertragungswegs von einer Eingangswelle (31) zu einer Ausgangswelle (32) des Getriebes durch eine Axialbewegung von einer entsprechenden Mehrzahl von Muffen (32, 34, 35), die jeweils zwischen den Zahnradsätzen jedes Paars angebracht sind, enthält, wobei der Leistungsübertragungsweg von der Eingangswelle (31) zur Ausgangswelle (32) in einer beliebigen gewählten Schaltstufe über einen ausgewählten Zahnradsatz durch die Betätigung der Stellglieder (42, 44, 46), welche die Hülsen (33, 34, 35) axial bewegen, hergestellt wird.

7. Getriebeschaltsystem nach Anspruch 6, weiter enthaltend:
erste Erfassungsmittel (S12) zum Erfassen einer Betriebsposition eines Drosselventils (12);
zweite Erfassungsmittel (S13) zum Erfassen einer Rotationsgeschwindigkeit einer Kurbelwelle des Motors (10);
ein drittes Erfassungsmittel (S21) zum Erfassen einer Bewegungsposition eines Kupplungshebels (22) einer Automatikkupplung (20) und zum Erfassen eines Eingriffszustands einer Reibkupplung (23);
ein viertes Erfassungsmittel (S42, S44, S46) zum Erfassen einer Schaltposition der Muffen (33, 34, 35); und
ein fünftes Erfassungsmittel (SN, SR, SD, SM, S1, S2) zum Erfassen einer Betriebsposition des Betriebselements, wobei die Signale, die durch das Erfassungsmittel erfasst werden, in das Steuermittel eingegeben werden;
wobei das Getriebe in einem manuellen Modus oder einem automatischen Modus betreibbar ist und in dem automatischen Modus die Schaltstufe des Getriebes in Abhängigkeit von den Eingaben von dem ersten bis fünften Erfassungsmittel wählt und steuert.

## Revendications

1. Système de changement de vitesse pour un véhicule à moteur comprenant :
une transmission manuelle automatique (30) pour transmettre la force motrice du moteur (10) aux roues du véhicule, la transmission (30) comportant un moyen de contrôle (50) incluant une commande de changement de vitesse (102) contrôlant des actionneurs (42, 44, 46) qui régissent los opérations de changement de vitesse de la transmission (30) en réponse à l'actionnement d'un levier de commande (41) ;
un démarreur (60) pour le moteur (10) du véhicule, et
un dispositif permettant d'empêcher un actionnement du démarreur (60) sauf lorsque la transmission est au point mort ;
**caractérisé en ce que** le moyen de contrôle (50) comprend
un dispositif (S13, 101) permettant de détecter que le moteur (10) est arrêté ;
un dispositif (101) permettant de désactiver la commande de changement de vitesse (102) lorsque le moteur est arrêté ; et
un dispositif de passage au point mort (200) efficace quand le moteur est arrêté afin de permettre aux actionneurs (42, 44, 46) de commander le changement de vitesse de la transmission (30) uniquement de manière à passer au point mort en réponse à un actionnement du levier de commande (41).

2. Système de changement de vitesse selon la revendication 1, comprenant en outre :
un dispositif (S32) permettant de détecter la vitesse et la direction du véhicule, et
un dispositif (103) permettant d'activer le dispositif de passage au point mort (200) lorsque la vitesse du véhicule est inférieure à une vitesse prédéterminée en marche avant ou en marche arrière et de désactiver le dispositif de passage au point mort (200) lorsque la vitesse du véhicule atteint ou dépasse la vitesse prédéterminée en marche avant ou en marche arrière.

3. Système de changement de vitesse selon la revendication 2, comprenant en outre :
un dispositif de passage de marche avant (300) efficace lorsque le moteur (10) est arrêté et quand la vitesse du véhicule atteint ou dépasse la vitesse du véhicule prédéterminée en marche avant pour permettre aux actionneurs (42, 44, 46) de commander le changement de vitesse de la transmission (30) de manière à passer en marche avant en réponse à un actionnement du levier de commande (41).

4. Système de changement de vitesse selon la revendication 3, comprenant en outre :
un dispositif de passage de marche arrière (400) efficace lorsque le moteur (10) est arrêté et quand la vitesse du véhicule atteint ou dépasse la vitesse du véhicule prédéterminée en marche arrière pour permettre aux actionneurs (42, 44, 46) de commander le changement de vitesse de la transmission (30) de manière à passer en marche arrière en réponse à un actionnement du levier de commande (41).

5. Système de changement de vitesse selon l'une quelconque des revendications précédentes, dans lequel les actionneurs (42, 44, 46) sont des actionneurs électriques.

6. Système de changement de vitesse selon l'une quelconque des revendications précédentes, dans lequel la transmission manuelle automatique comporte une pluralité de paires de trains d'engrenages (G1 et G4, G2 et G5, G3 et Gr) destinés à établir ou interrompre une voie de transmission de puissance depuis un arbre d'entrée (31) jusqu'à un arbre de sortie (32) de la transmission par un mouvement axial de l'un quelconque d'une pluralité correspondante de manchons (33, 34, 35) respectivement disposés entre les trains d'engrenages de chaque paire, où la voie de transmission de puissance depuis l'arbre d'entrée (31) jusqu'à l'arbre de sortie (32) dans un rapport sélectionné quelconque par l'intermédiaire d'un train d'engrenages sélectionné par le fonctionnement des actionneurs (42, 44, 46) déplaçant les manchons (33, 34, 35) de manière axiale.

7. Système de changement de vitesse selon la revendication 6, comprenant en outre :
un premier moyen de détection (S12) permettant de détecter une position de fonctionnement d'une soupape de pression d'accélération (12) ;
un deuxième moyen de détection (S13) permettant de détecter la vitesse de rotation d'un vilebrequin (13) du moteur (10) ;
un troisième moyen de détection (S21) permettant de détecter une position mouvante d'une manette d'embrayage (22) d'un embrayage automatique (20) et permettant de détecter un état d'enclenchement d'un embrayage à friction (23) ;
un quatrième moyen de détection (S42, S44, S46) permettant de détecter une position changeante des manchons (33, 34, 35) ; et
un cinquième moyen de détection (SN, SR, SD, SM, S1, S2) permettant de détecter une position de fonctionnement de l'élément d'actionnement, dans lequel des signaux détectés par le moyen de détection sont entrés dans le moyen de contrôle ;
dans lequel la transmission peut fonctionner en mode manuel ou automatique et dans le mode automatique sélectionne et contrôle le rapport de la transmission conformément aux entrées provenant des premier à cinquième moyens de détection.
